Europäisches Patentamt

European Patent Office

Office européen des brevets

(11) Publication number: **0 447 598 A1**

# EUROPEAN PATENT APPLICATION

(21) Application number: 90105590.5

(51) Int. Cl.⁵: **G01N 21/35**, G01J 1/44

(22) Date of filing: **23.03.90**

(43) Date of publication of application:
**25.09.91 Bulletin 91/39**

(84) Designated Contracting States:
**DE SE**

(71) Applicant: **NIHOH KOHDEN CORPORATION**
**31-4 Nishiochiai 1-Chome**
**Shinjuku-Ku, Tokyo(JP)**

(72) Inventor: **Kurahashi, Muneshige**
**1188-5-703, Kamiarai, Tokorozawa-shi,**
Saitama-ken,(JP)
Inventor: **Kato, Naoki**
**16-5-404, Yamatocho, Itabashi-ku,**
**Tokyo(JP)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) **Infrared detecting circuit.**

(57) An infrared detecting circuit (20) is provided with an electric current detecting circuit wherein a constant voltage is applied to an infrared sensor (21) from a constant voltage source. The electric current flowing into the infrared sensor (21) is detected as an infrared detecting signal, in order to enable the detection of an incident dose of infrared light with high accuracy in a wide temperature range.

FIG. 1

## BACKGROUND OF THE INVENTION

### Field of the invention

The present invention relates to an infrared detecting circuit for detecting an incident dose of infrared light with an infrared detecting element using a semiconductor, for example made of PbSe.

### Description of the Prior Art

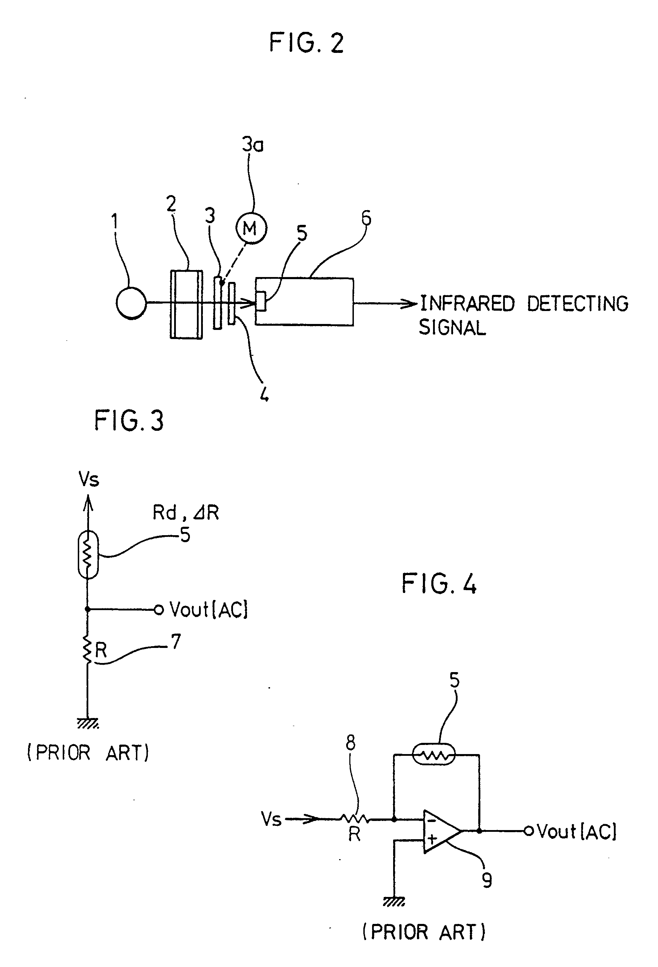

Fig. 2 shows a gas component concentration measuring apparatus utilizing an infrared absorption method with such an infrared detecting circuit. Infrared light emitted from an infrared source 1 is directed through a filter 4 which permits only infrared light of a specific wavelength to pass. When the infrared light from the infrared source 1 has been transmitted through a gas in a cell 2 and the beam has been turned on and off by a chopper 3 rotated by a motor 3a, the light irradiates a PbSe infrared sensor 5 as mentioned above.

When the infrared light has irradiated the infrared sensor 5, a photoelectrically converted infrared detecting signal is output from an infrared detecting circuit 6, wherein the amount of infrared light absorbing gas in the cell 2 is detected from the decrease in the level of the measured signal.

As for the infrared detecting circuit 6, an infrared detecting circuit of the bridge constant-voltage applying type as shown in Fig. 3 is well known. The infrared detecting signal Vout (AC) of an alternating voltage is as follows:

$$\text{Vout (AC)} = \frac{Vs \cdot R}{R + Rd - \Delta R} - \frac{Vs \cdot R}{R + Rd}$$

$$\cong \frac{\Delta R \cdot Vs \cdot R}{(R + Rd)^2} \quad (\Delta R \ll Rd) \quad ,$$

wherein the symbols have the following meaning:

Rd = dark resistance of the PbSe infrared sensor 5
ΔR = change of the resistance caused by the reception of infrared light
R = resistance of a series resistance 7
Vs = applied constant voltage.

In addition, as shown in Fig. 4, an infrared detecting circuit 6 of the constant-current applying type is well known, wherein a PbSe infrared sensor 5 is provided in a feedback loop supplied with constant current by constant voltage Vs which is connected to a negative input terminal of an operational amplifier 9 through a resistor 8 having a resistance value of R. In this case, the infrared detecting signal of an alternating voltage is as follows:

Vout (AC) = Vs x $\Delta$ R / R.

However, infrared detecting signals produced according to these aforementioned methods show large variations in their respective values induced by the temperature change of ΔR. Since the former value varies about 40 % and the latter value varies about 70 % in the temperature range of 15 °C to 35 °C, it is difficult to obtain a stable detection regardless of the temperature.

Altough an additional circuit performing a temperature compensation may be employed, it is difficult to obtain full compensation because of the high temperature variations. In addition, it is difficult to achieve a high measuring accuracy when the temperature becomes high and the infrared detecting signal becomes small.

## SUMMARY OF THE INVENTION

The object underlying the present invention is to provide an infrared detecting circuit using an infrared sensor, for example a PbSe semiconductor device, which enables the detection of an incident dose of infrared light with high accuracy throughout a wide temperature range.

According to the present invention, an infrared detecting circuit for detecting an incident of infrared light with an infrared detecting element using a semiconductor element, the resistance of which varies when irradiated with infrared light, is characterized in that the infrared detecting circuit comprises the following components:

- an infrared sensor connected with its first end to a constant voltage,
- an operational amplifier connected with its negative input terminal to the second end of the infrared sensor and with its positive input terminal to a standard potential,
- a feedback resistor connected in a feedback loop between the output terminal and the negative input terminal of the operational amplifier,

wherein the operational amplifier forms an electric current detecting circuit and supplies at its output terminal the infrared detecting signal.

A specific embodiment of the infrared detecting circuit according to the invention is characterized in that the infrared sensor is intermittently irradiated with infrared light from an infrared light source through a chopper device.

According to a further development of the present invention, the infrared detecting circuit is characterized in that the chopper device comprises two different rotatingly driven filters offset by 180° generating light of two different infrared wavelengths and being operated synchronized with the detecting circuit, and in that the respective two infrared detecting signals output from the operational amplifier are evaluated by discrimination.

According to another aspect of the present invention, a device for measuring the absorption of gases, especially eshalation gases, is provided which comprises an infrared detecting circuit as defined above wherein the gas to be detected is supplied to a cell having transparent opposite windows and provided for a flow of gas through which infrared light from an infrared light source is irradiated on the infrared sensor.

According to the invention, use is made of the fact that the temperature coefficient responsible for the change of resistance of the infrared sensor, for example made of PbSe, caused by the reception of infrared light is equivalent to the square of the temperature coefficient of the dark resistance of the infrared sensor.

In the infrared detecting circuit according to the invention, the infrared detecting signal of the alternating current Iout (AC) can be expressed by the following formulae:

$$\text{Iout (AC)} = \frac{Vs}{Rd - \Delta R} - \frac{Vs}{Rd}$$

$$\cong \frac{\Delta R \cdot Vs}{Rd^2} \qquad (\Delta R \ll Rd) \qquad ,$$

wherein the symbols have the following meaning:

$Vs$ = voltage of the constant voltage source
$\Delta R$ = change of the resistance caused by the reception of infrared light
$Rd$ = dark resistance of the sensor.

The temperature coefficient of $\Delta R / Rd^2$ drops almost to zero since the temperature coefficient of $\Delta R$ is almost equivalent to the square of the temperature coefficient of $Rd$ under the usual room temperature environment. Therefore, an infrared detecting signal is output whose level is determined by the constant voltage $Vs$ which is stable against temperatures.

According to the present invention, an extremely fine temperature compensation characteristics can be obtained by the infrared detecting circuit detecting the electric current flowing when applying a constant voltage to the infrared sensor.

Further aspects, features and advantages of the present invention will become apparent from the description of a preferred embodiment in connection with the accompanying drawings.

## BRIEF DESCRIPTION OF THE DRAWINGS

Fig. 1 shows the structure of a main part of an exhalation gas concentration measuring apparatus having an infrared detecting circuit according to an embodiment of the present invention.

Fig. 2 shows a general structure of a gas component concentration measuring apparatus using an infrared detecting circuit.

Figs. 3 and 4 shows circuit diagrams of conventional infrared detecting circuits.

## DESCRIPTION OF THE PREFERRED EMBODIMENTS

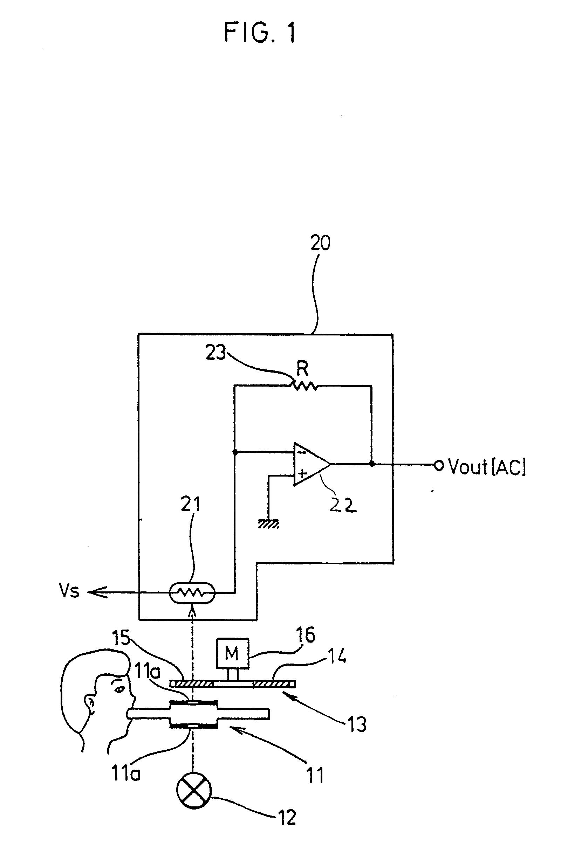

Fig. 1 shows an embodiment applying the present invention to an exhalation gas concentration measuring apparatus of a sampling and flow-through type. This embodiment will be explained in detail below.

In this Fig. 1, an exhalation gas concentration measuring apparatus comprises the following components: a tubular cell 11 having two airtight windows 11a which face each other in a direction normal to that of the flow of the exhalation gas; an infrared source 12; a rotating chopper 13 having two filters 14 and 15 whose transmission wavelengths differ from each other, the chopper 13 being rotated by a motor 16; and an infrared detecting circuit 20 containing a PbSe infrared sensor 21 detecting the intermittently transmitted light from the chopper 13 and outputting an electric signal as a measuring signal.

The filters 14 and 15 are installed so that they are offset or displaced by $180°$ from each other. The filter 14 transmits only infrared light having a first wavelength which is absorbed by the specific exhalation gas, for example carbon dioxide, and the filter 15 transmits only infrared light having a second wavelength which is not absorbed by the specific exhalation gas, e. g. carbon dioxide.

The infrared detecting circuit 20 is so constructed that the infrared detecting signal is output from the output terminal of an operational amplifier 22 which is connected to the PbSe infrared sensor 21 with its negative input terminal, while the positive input terminal of the operational amplifier 22 is connected to ground.

A constant voltage source (not shown) applies a constant voltage Vs to the one end of the infrared sensor 21, which is connected with its other end to the operational amplifier 22, namely the negative input terminal thereof. A feedback resistor 23 of a resistance R determining the amplification degree of the circuit is connected between the output terminal and the negative input terminal of the operational amplifier 22.

Since the constant voltage Vs is always applied to the infrared sensor 21 whose resistance value varies when irradiated with infrared light, almost all of the electric current flowing through the PbSe infrared sensor 21 flows into the resistor 23 because of the large input impedance of the operational amplifier 22 so that a corresponding voltage change is generated and output of the output terminal of the operational amplifier 22.

Eventually, the following infrared detecting signal Vout (AC) is obtained:

$$Vout\ (AC) = \frac{Vs \cdot R}{Rd - \Delta R} - \frac{Vs \cdot R}{Rd}$$

$$\cong \frac{\Delta R \cdot Vs \cdot R}{Rd^2} \qquad (\Delta R \ll Rd) \qquad ,$$

wherein the symbols have the following meaning:

Vs = constant voltage
$\Delta R$ = change of the resistance caused by the reception of infrared light
Rd = dark resistance of the sensor 21
R = resistance of the resistor 23.

Therefore, the infrared detecting signal has a level which corresponds to the incident dose of infrared light with high precision regardless of any change in temperature. This is because the temperature coefficient $\Delta R / Rd^2$ can be offset and be set at a very small value, and the temperature coefficients of R and Vs can easily be set and considered as being considerably lower than the temperature coefficient of $\overline{\Delta R}$. It was confirmed in an experiment that only 10 % of the level change occured in a range or 15 $°$C to 35 $°$C.

The infrared detecting signalsalternately input through the filters 14 and 15 and detected by the infrared detecting circuit 20 are evaluated after discrimination by respective two synchronized detecting circuits which operate in a sychronized manner with the rotation of the motor 16 and the filters 14 and 15 of the chopper 13. Then, the amount of a specific exhalation gas, e. g. carbon dioxide is calculated from the ratio of these two output signals.

Furthermore, it is clear that the infrared detecting circuit of the aforementioned embodiment is also applicable to an one wavelength system having an infrared detecting circuit as shown in Fig. 2. As for the electric current detecting circuit, the circuit may also be assembled using individual parts, for example transistors, resistors, FETs and so on instead of an operational amplifier.

**Claims**

1. An infrared detecting circuit for detecting an incident dose of infrared light with an infrared detecting element (21) using a semiconductor element, the resistance of which varies when irradiated with infrared light,
   characterized in that the infrared detecting circuit (20) comprises the following components:
   - an infrared sensor (21) connected with its first end and to a constant voltage (Vs),
   - an operational amplifier (22) connected with its negative input terminal to the second end of the infrared sensor (21) and with its positive input terminal to a standard potential,
   - a feedback resistor (23) connected in a feedback loop between the output terminal and the negative input terminal of the operational amplifier (22),
     wherein the operational amplifier (22) forms an electric current detecting circuit and supplies at its output terminal the infrared detecting signal (Vout (AC)).

2. The infrared detecting circuit according to claim 1 characterized in that the infrared sensor (21) is intermittently irradiated with infrared light from an infrared light source (12) through a chopper device (13, 14, 15, 16).

3. The infrared detecting circuit according to claim 2, characterized in that the chopper device (13, 14, 15, 16) comprises two different rotatingly driven filters offset by 180° generating light of two different infrared wavelengths and being operated synchronized with the detecting circuit (20),
   and in that the respective two infrared detecting signals output from the operational amplifier (22) are evaluated by discrimination.

4. A device for measuring the absorption of gases, especially exhalation gases,
   characterized in that it comprises an infrared detecting circuit according to any of claims 1 to 3,
   and in that the gas to be detected is supplied to a cell (11) having transparent opposite windows (11a) and provided for a flow of gas through which infrared light from an infrared light source (12) is irradiated on the infrared sensor (21).

# FIG. 1

## FIG. 2

INFRARED DETECTING
SIGNAL

## FIG.3

Vs

Rd, $\Delta R$ — 5

Vout [AC]

R — 7

(PRIOR ART)

## FIG. 4

Vs

R 8

Vout [AC]

9

(PRIOR ART)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 103 174 (E. McCLATCHIE et al.)<br>* Columns 11-13; figures 2,10,16 *<br>– – – | 1-4 | G 01 N 21/35<br>G 01 J 1/44 |
| A | US-A-4 479 057 (I.B. KARPOWYCZ)<br>* Columns 2-3 *<br>– – – | 1,4 | |
| A | US-A-4 040 747 (D.R. WEBSTER)<br>* Columns 8-9; figure 5 *<br>– – – – – | 1,2 | |
| | | | **TECHNICAL FIELDS SEARCHED (Int. Cl.5)**<br><br>G 01 J 1/44<br>G 01 J 5/30<br>G 01 N 21/35<br>G 01 N 21/31 |

The present search report has been drawn up for all claims

| Place of search | Date of completion of search | Examiner |
|---|---|---|
| The Hague | 26 November 90 | BOEHM CH.E.D. |